# FASCICULE DE BREVET EUROPEEN

(11) **EP 0 633 165 B1**
(45) Date de publication et mention de la délivrance du brevet: **27.11.1996**
(21) Numéro de dépôt: 94401489.3
(22) Date de dépôt: 30.06.1994
(51) Int. Cl.: B60Q 3/04

(54) **Tableau de bord sans conduit optique**
Armaturenbrett ohne Lichtleiter
Dashboard without light conduit

(30) Priorité: 06.07.1993 FR 9308262
(43) Date de publication de la demande: 11.01.1995
(73) Titulaire: SOCIETE D'APPLICATIONS GENERALES D'ELECTRICITE ET DE MECANIQUE SAGEM, F-75783 Paris Cédex 16 (FR)
(72) Inventeur: Metais, Derry, F-95650 Genicourt (FR)
(74) Mandataire: Bloch, Gérard

(56) Documents cités:
- EP-A- 0 503 400
- EP-A- 0 508 791
- DE-A- 2 310 715
- FR-A- 2 213 559

## Description

Un tableau de bord, et il est fait ici principalement, mais non exclusivement, référence à celui des véhicules automobiles, comporte une face avant avec, d'un côté, à l'arrière, des mouvements et, de l'autre côté, à l'avant, des organes indicateurs, comme par exemple des aiguilles entrainées par les mouvements, et un film sérigraphié portant des caractères et symboles d'information, ou d'indication, comme un dessin de pompe à essence ou d'autre témoin, des divisions d'un cadran, caractères et symboles qui sont destinés à être visualisés ou lus, certains, en association avec les organes indicateurs. Tant les organes indicateurs que les caractères et symboles du film sérigraphié sont généralement éclairés par l'arrière au moyen de boites à lumière, de conduits optiques et de sources d'éclairage du type lampe à incandescence, lampe à halogène, tube à cathode froide. Ces sources sont encombrantes, pas toujours très fiables et relativement grandes consommatrices d'énergie.

Par le document FR-A-2 213 559 on connaît un panneau du type comportant une face avant (1) et, à l'avant de la face avant, des moyens indicateurs (4-6) destinés à être éclairés par au moins une source d'éclairage (8, 9, 11, 12, 22, 23) s'étendant dans un évidement (7, 13, 14, 20) ménagé dans l'épaisseur de la face avant (1) et formant boîte à lumière.

La présente invention vise à proposer un tableau de bord du type du panneau de l'art antérieur mais permettant une bonne réflexion de la lumière de la source et une bonne homogénéité ainsi qu'une bonne luminance de l'éclairement.

A cet effet, la présente invention concerne un tableau de bord du type ci-dessus, caractérisé par le fait qu'il est prévu, dans la face avant (1), au moins un évidement (13, 14), de réception d'au moins une source d'éclairage (11, 12), en forme de cuvette, avec un voile de fond arrière (15) pour entourer la source (11, 12) et réfléchir la lumière.

Le tableau de bord de l'invention est donc défini par l'aménagement, dans la face avant même, d'un évidement ou alvéole, formant boite à lumière, par conséquent d'un très faible volume, grâce à quoi le rendement lumineux est excellent. La source est disposée pour assurer un éclairage direct par l'arrière, sans conduit optique, et à bonne distance des moyens indicateurs à éclairer. Le voile de fond arrière sert de réflecteur et maintient la rigidité de la face avant.

L'invention est intéressante en cas de pluralité de sources d'éclairage.

Par tableau de bord, il faut naturellement entendre aussi bien l'ensemble d'un tableau de bord qu'un module ou élément de tableau de bord, le premier étant un tableau de bord complet et le second, un tableau de bord élémentaire.

De préférence, la source d'éclairage est choisie dans le groupe des diodes électroluminescentes à monter en surface (CMS), des diodes électroluminescentes radiales à monter couchées et des minilampes.

Le tableau de bord comporte normalement, comme indiqué plus haut, un support sérigraphié d'au moins un ensemble graphique indicateur à éclairer et, alors, un évidement de réception d'une source d'éclairage est ménagé dans la face avant au droit de cet ensemble graphique, l'évidement étant ainsi fermé, à l'avant, par le support sérigraphié.

Avantageusement, la face avant est en un matériau blanc pour encore augmenter par réflexion la luminance et l'homogénéité de l'éclairement.

Avantageusement aussi, le support sérigraphié est également en un matériau diffusant de couleur blanche.

En variante, le support de l'ensemble graphique indicateur étant en un matériau diffusant naturel, l'ensemble indicateur est rapporé par une couche arrière de sérigraphie de couleur blanche fermant, à l'avant, l'évidement d'éclairage.

La source d'éclairage est montée sur un support électrique fermant à l'arrière l'évidement d'éclairage et qui peut être un circuit imprimé classique, portant d'autres composants électriques nécessaires au fonctionnement du tableau de bord, ou un circuit souple flexible.

Avantageusement, le support électrique de la source, dans la zône de celle-ci, est de couleur blanche, teintée dans la masse ou obtenue par sérigraphie déposée sur sa face tournée vers l'avant.

Dans ce cas, la source destinée à éclairer l'ensemble graphique indicateur peut donc être disposée dans un logement à parois extérieures blanches, constituées des parois de l'évidement de la face avant, du support sérigraphié et du support électrique de la source d'éclairage.

Le tableau de bord comporte normalement aussi au moins un organe indicateur, telle une aiguille lumineuse, et, dans ce cas, un évidement d'éclairage est ménagé dans la face avant au droit du corps de l'organe indicateur qui est recouvert d'un capot, la paroi de l'évidement d'éclairage étant prolongée vers l'avant par une jupe en saillie agencée pour former avec le capot de l'organe indicateur une chicane anti-fuite de lumière.

Avantageusement encore, l'évidement d'éclairage de l'organe indicateur est ménagé pour recevoir deux sources. Avec une seule source bicolore ou deux sources de couleurs différents, l'organe indicateur peut être un indicateur à changement de couleur.

L'invention sera mieux comprise à l'aide de la description suivante de plusieurs parties du tableau de bord de l'invention, en référence au dessin en annexe, sur lequel
- la figure 1 est une vue en coupe d'une première partie du tableau de bord, à symbole graphique indicateur ;
- la figure 2 est une vue en coupe d'une deuxième partie du tableau de bord, à cadran ;
- la figure 3 est une vue en perspective de dessus d'une portion de la face avant de la partie de tableau de bord de la figure 2 et
- la figure 4 est une vue en coupe d'une troisième partie du tableau de bord, à aiguille lumineuse.

Le tableau de bord, ou combiné, de l'invention, qui sera décrit par ses seuls éléments nécessaires à la compréhension de l'invention et qui est en l'espèce celui d'un véhicule automobile, comprend un boitier, ou face avant, 1 avec, à l'avant, un film sérigraphié 2 et, à l'arrière, un circuit électrique souple flexible 3.

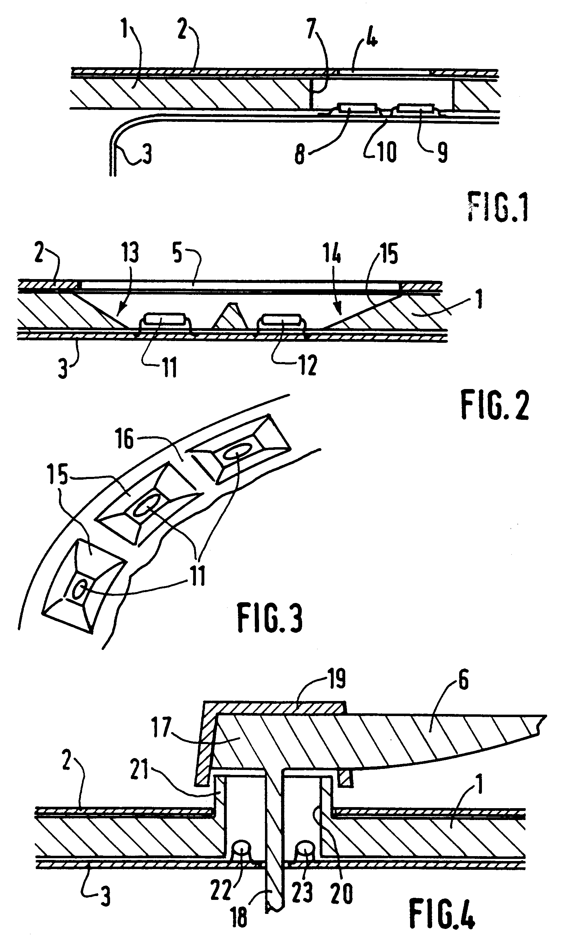

Sont sérigraphiés sur le film 2 une pluralité d'ensembles graphiques indicateurs comme le dessin 4 d'une pompe à essence, celui d'un thermomètre,...(figure 1), un groupe 5 de divisions d'un cadran (figure 2).

Le tableau de bord comporte une pluralité d'organes indicateurs comme l'aiguille lumineuse 6 (figure 4) à laquelle est associé le cadran 5 du film sérigraphié 2.

Le film 2 est fixé à la face avant 1 de façon classique, par exemple par collage.

Le circuit flexible souple 3, ici en polyester, est un support électrique d'alimentation de diodes électroluminescentes d'éclairage, dont il sera question ci-après, rapporté à l'arrière de la face avant 1 à laquelle il est fixé aussi de façon classique, en l'espèce par des pions. Son raccordement électrique aux autres modules électriques du tableau de bord est encore réalisé de façon classique, par exemple par connecteur.

Le film 2 peut être, par exemple, en polycarbonate ou méthacrylate, soit de couleur blanche teintée dans la masse, soit de couleur naturelle mais alors avec une couche arrière de sérigraphie, tournée vers la face avant 1, de couleur blanche.

Dans l'exemple considéré, la face avant 1 est en acrylonitrile -butadiène- styrène (ABS) blanc.

En référence à la figure 1, au droit du dessin sérigraphié 4, la face avant 1 est pourvue d'un évidement 7 dans lequel sont ici logées deux diodes électroluminescentes CMS (composants montés en surface) 8, 9 soudées sur le circuit 3 et destinées à éclairer par l'arrière le dessin 4. La zône 10 du circuit flexible 3 qui est en regard du dessin 4 est de couleur blanche obtenue par sérigraphie. La paroi intérieure de l'évidement 7, la face arrière de la couche de sérigraphie déposée sur le film 2, à l'avant, et la face sérigraphiée du flexible 3, tournée vers la face avant 1, à l'arrière, forment, dans l'épaisseur de la face avant 1, les parois, blanches, d'une boite à lumière pour les diodes 8, 9. Le dessin 4 peut ainsi être éclairé dans d'excellentes conditions.

En référence aux figures 2, 3, les divisions du cadran 5 sont éclairées par une double rangée circulaire de diodes électroluminescentes 11, 12 montées sur le circuit souple 3 et logées respectivement dans une double série d'évidements 13, 14 de la face avant 1, en forme de cuvette avec un voile de fond 15 entourant la diode associée (11, 12). Les voiles de fond 15, qui servent de réflecteurs, sont formés par des parois inclinées ménagées dans la face avant 1 et dégageant des croisillons 16 de rigidification.

En référence à la figure 4, l'aiguille lumineuse 6 comporte un corps 17 en bout d'un arbre de rotation 18 et recouvert d'un capot 19. Un évidement 20 est ménagé dans la face avant 1 au droit du corps d'aiguille 17. La paroi de l'évidement 20 est prolongée, vers l'avant, par une jupe en saillie 21 s'étendant jusque sous le capot 19 de l'aiguille dans lequel elle s'encastre, pour former une chicane anti-fuite de lumière. Deux diodes électroluminescentes 22, 23, de couleurs différentes, ici verte et rouge, sont montées sur le circuit souple 3, à travers lequel s'étend l'arbre 18 de l'aiguille, et s'étendent dans l'évidement 20, sous le corps d'aiguille 17, de part et d'autre de l'arbre d'aiguille 18.

Grâce à la disposition des deux diodes 22, 23, il est possible de faire varier la couleur dans laquelle apparait l'aiguille 6 au cours de sa rotation. Cette variation de couleur peut être brusque ou progressive. Pour une variation brusque, et faire passer la couleur de l'aiguile, par exemple, du vert au rouge en cas de vitesse ou régime excessif, il suffit de commuter les diodes 22, 23 de l'une sur l'autre. Pour une variation progressive, on peut alimenter les diodes 22, 23, à travers le circuit 3, respectivement par deux signaux de commande à rapports cycliques variables et complémentaires. Ainsi, la couleur de l'aiguille peut varier du vert au rouge en passant par un mélange des deux, c'est-à-dire sensiblement du jaune.

## Revendications

1. Tableau de bord comportant une face avant (1) et, à l'avant de la face avant, des moyens indicateurs (4-6) destinés à être éclairés par au moins une source d'éclairage (8, 9, 11, 12, 22, 23) s'étendant dans un évidement (7, 13, 14, 20) ménagé dans l'épaisseur de la face avant (1) et formant boîte à lumière, caractérisé par le fait qu'il est prévu, dans la face avant (1), au moins un évidement (13, 14), de réception d'au moins une source d'éclairage (11, 12), en forme de cuvette, avec un voile de fond arrière (15) pour entourer la source (11, 12) et réfléchir la lumière.

2. Tableau de bord selon la revendication 1, dans lequel les moyens indicateurs comprennent au moins un ensemble graphique (4) sérigraphié sur un support (2) et un évidement (7) de réception d'au moins une source d'éclairage (8, 9) est ménagé dans la face avant (1) au droit de l'ensemble graphique (4), l'évidement (7) étant fermé, à l'avant, par le support sérigraphié (2).

3. Tableau de bord selon la revendication 2, dans lequel le support sérigraphié (2) est en un matériau diffusant de couleur blanche.

4. Tableau de bord, selon la revendication 2, dans lequel l'ensemble graphique indicateur (4) est rapporté sur ledit support sérigraphié (2) par une couche arrière de sérigraphie de couleur blanche, fermant, à l'avant, ledit évidement (7).

5. Tableau de bord selon l'une des revendications 1 à 4, dans lequel la source d'éclairage (8, 9) est montée sur un support électrique (3) fermant, à l'arrière, ledit évidement (7).

6. Tableau de bord selon la revendication 5, dans lequel ledit support électrique (3), dans la zône de montage de ladite source d'éclairage (8, 9), est de couleur blanche.

7. Tableau de bord selon la revendication 6, dans lequel ladite zône de montage dudit support électrique (3) est teintée dans la masse.

8. Tableau de bord selon la revendication 6, dans lequel une sérigraphie de couleur blanche est déposée sur la face dudit support électrique (3) tournée vers l'avant, dans ladite zône de montage dudit support électrique (3).

9. Tableau de bord selon l'une des revendications 1 à 8, dans lequel les moyens indicateurs comprennent au moins un organe indicateur (6), avec un corps (17), un évidement d'éclairage (20) est ménagé dans la face avant (1) au droit du corps (17) de l'organe indicateur (6) qui est recouvert d'un capot (19) et la paroi de l'évidement d'éclairage (20) est prolongée, vers l'avant, par une jupe (21) en saillie agencée pour former avec le capot (19) une chicane anti-fuite de lumière.

10. Tableau de bord selon l'une des revendications 1 à 9, dans lequel la face avant (1) est en un matériau de couleur blanche.

11. Tableau de bord selon l'une des revendications 1 à 10, dans lequel la source d'éclairage (8, 9, 11, 12, 22, 23) est choisie dans le groupe des diodes électroluminescentes à monter en surface, des diodes électroluminescentes radiales à monter couchées et des minilampes.

12. Tableau de bord selon l'une des revendications 1 à 10, dans lequel il est prévu une source d'éclairage bicolore (8, 9, 11, 12, 22, 23).

13. Tableau de bord selon l'une des revendications 1 à 12, dans lequel il est prévu des moyens indicateurs (6) destinés à être éclairés par au moins deux sources d'éclairage (22, 23) de couleurs respectives différentes s'étendant dans un évidement (20) ménagé dans la face avant (1).

14. Tableau de bord selon la revendication 13, dans lequel les deux sources d'éclairage (22, 23) sont alimentées par des signaux à rapports cycliques variables et complémentaires.

## Claims

1. Dash-board comprising a front side (1) and, in front of the front side, indicator means (4-6) intended to be illuminated by at least one illumination source (8,9,11,12,22,23) extending in a recess (7,13,14,20) provided in the depth of the front side (1) and forming a light box, characterised by the fact that there is provided, in the front side (1) , at least one recess (13,14) for receiving at least one illumination source (11,12), in the shape of a dish, with a rear bottom veil (15) for surrounding the source (11,12) and reflecting the light.

2. Dash-board according to Claim 1, in which the indicator means comprise at least one graphic arrangement (4) screen-printed on a support (2) and a recess (7) for receiving at least one illumination source (8,9) is provided in the front side (1) opposite the graphic arrangement (4), the recess (7) being closed, at the front, by the screen-printed support (2).

3. Dash-board according to Claim 2, in which the screen-printed support (2) is made from a diffusing material of white colour.

4. Dash-board according to Claim 2, in which the graphic indicator arrangement (4) is attached to said screen-printed support (2) by a rear screen-printed film of white colour, closing-off said recess (7), at the front.

5. Dash-board according to one of Claims 1 to 4, in which the illumination source (8,9) is mounted on an electrical support (3) closing-off said recess (7), at the rear.

6. Dash-board according to Claim 5, in which said electrical support (3), in the mounting area of said illumination source (8,9), is of white colour.

7. Dash-board according to Claim 6, in which said mounting area of said electrical support (3) is coloured throughout.

8. Dash-board according to Claim 6, in which screen-printing of white colour is applied to the side of said electrical support (3) facing forwards, in said mounting area of said electrical support (3).

9. Dash-board according to one of Claims 1 to 8, in which the indicator means comprise at least one indicator member (6), with a body (17), an illumination recess (20) is provided in the front side (1) opposite the body (17) of the indicator member (6) which is covered by a cap (19) and the wall of the illumination recess (20) is extended, forwards, by a projecting skirt (21) arranged to form with the cap (19) a baffle to prevent the leakage of light.

10. Dash-board according to one of Claims 1 to 9, in which the front side (1) is made from a material of white colour.

11. Dash-board according to one of Claims 1 to 10, in which the illumination source (8,9,11,12,22,23) is chosen from the group of electro-luminescent diodes to be surface-mounted, radial electro-luminescent diodes to be mounted lying down and mini-lamps.

12. Dash-board according to one of Claims 1 to 10, in which a two-coloured illumination source (8,9,11,12,22,23) is provided.

13. Dash-board according to one of Claims 1 to 12, in which indicator means (6) are provided which are intended to be illuminated by at least two illumination sources (22,23) of different respective colours extending in a recess (20) provided in the front side (1).

14. Dash-board according to Claim 13, in which the two illumination sources (22,23) are supplied by signals having variable and complementary cyclic ratios.

## Patentansprüche

1. Armaturenbrett, enthaltend eine Vorderwand (1) und vor dieser Vorderwand befindliche Anzeigeinstrumente (4 - 6), die von mindestens einer Leuchtquelle (8, 9, 11, 12, 22, 23) beleuchtet werden, die in einer Ausnehmung (7, 13, 14, 20) untergebracht ist, welche innerhalb der Dicke der Vorderwand (1) angebracht ist und ein Leuchtgehäuse bildet, dadurch gekennzeichnet, daß in der Vorderwand (1) zur Aufnahme mindestens einer Leuchtquelle (11, 12) mindestens eine Ausnehmung in Form einer Mulde (13, 14) mit einem hinteren Grundschleier (15) vorgesehen ist, um die Quelle (11, 12) zu umgeben und das Licht zu reflektieren.

2. Armaturenbrett nach Anspruch 1, bei dem die Anzeigeinstrumente mindestens ein graphisches Element (4) umfassen, das auf einem Träger (2) durch Serigraphie aufgetragen ist, und wobei in der Vorderwand (1) zur Aufnahme mindestens einer Leuchtquelle (8,9) gegenüber dem graphischen Element (4) eine Ausnehmung (7) angebracht ist, die nach vorn hin durch den Serigraphieträger (2) verschlossen ist.

3. Armaturenbrett nach Anspruch 2, bei dem der Serigraphieträger (2) aus einem lichtstreuenden Material weißer Farbe besteht.

4. Armaturenbrett nach Anspruch 2, bei dem das graphische Anzeigeelement (4) auf diesen Serigraphieträger (2) mittels einer hinteren Ssrigraphieschicht weißer Farbe aufgetragen ist, welche diese Ausnehmung (7) an der Vorderseite verschließt.

5. Armaturenbrett nach einem der Ansprüche 1 bis 4, bei dem die Leuchtquelle (8, 9) auf einem elektrischen Träger (3) montiert ist, der diese Ausnehmung (7) an der Rückseite verschließt.

6. Armaturenbrett nach Anspruch 5, bei dem dieser elektrische Träger (3) in der Montagezone dieser Leuchtquelle (8, 9) von weißer Farbe ist.

7. Armaturenbrett nach Anspruch 6, bei dem diese Montagezone dieses elektrischen Trägers (3) in ihrer Masse getönt ist.

8. Armaturenbrett nach Anspruch 6, bei dem eine Serigraphie weißer Farbe auf der Fläche dieses elektrischen Trägers (3) abgelagert ist, die in dieser Montagezone dieses elektrischen Trägers (3) nach vorne gewendet ist.

9. Armaturenbrett nach einem der Ansprüche 1 bis 8, bei dem diese Anzeigeinstrumente mindestens ein Anzeigeorgan (6) mit einem Körper (17) umfassen, wobei eine Beleuchtungsausnehmung (20) in der Vorderwand (1) gegenüber dem Körper (17) des Anzeigeorgans (6) angebracht ist, welches von einer Haube (9) überdeckt ist, und wobei die Wand der Beleuchtungsausnehmung (20) zur Vorderseite hin durch eine vorspringende Schürze (21) verlängert ist, um eine Schikane zur Verhinderung von Lichtverlusten zu bilden.

10. Armaturenbrett nach einem der Ansprüche 1 bis 9, bei dem die Vorderwand (1) aus einem Material weißer Farbe besteht.

11. Armaturenbrett nach einem der Ansprüche 1 bis 10, bei dem die Leuchtquelle (8, 9, 11, 12, 22, 23) ausgewählt ist aus der Gruppe von Elektrolumineszenz-Dioden für die Oberflächenmontage, radialen Elektrolumineszenz-Dioden für die Beschichtungsmontage und Minilampen.

12. Armaturenbrett nach einem der Ansprüche 1 bis 10, bei dem eine zweifarbige Leuchtquelle (8, 9, 11, 12, 22, 23) vorgesehen ist.

13. Armaturenbrett nach einem der Ansprüche 1 bis 12, bei dem Anzeigeelemente (6) vorgesehen sind, die von mindestens zwei Leuchtquellen (22, 23) jeweils unterschiedlicher Farben beleuchtbar sind, die in einer in der Vorderwand (1) angebrachten Ausnehmung (20) untergebracht sind.

14. Armaturenbrett nach Anspruch 13, bei dem die beiden Leuchtquellen (22, 23) gespeist werden von Signalen mit veränderlichen und komplementären periodischen Signalverhältnissen.
